# EUROPEAN PATENT APPLICATION

(11) **EP 4 703 586 A1**
(43) Date of publication of application: **04.03.2026**
(21) Application number: 25197893.8
(22) Date of filing: 25.08.2025
(51) Int. Cl.: F03D 9/10, F03D 13/10, F03D 80/00

(54) **SYSTEM AND METHOD FOR HARVESTING ENERGY OF A WIND TURBINE DURING AN OFF-GRID STATE**

(30) Priority: 28.08.2024 US 202418817337
(71) Applicant: GE Vernova Infrastructure Technology LLC, Greenville, SC 29615 (US)
(72) Inventor: Landa, Bernard P., Schenectady, NY 12345 (US); Madge, James H., Greenville, SC 29615 (US); Ridson, Ryan A., Greenville, SC 29615 (US)
(74) Representative: Zimmermann & Partner Patentanwälte mbB

(57) **Abstract**

A method for harvesting energy from one or more internal energy sources of a wind turbine of a wind farm during an off-grid state includes collecting energy from the one or more internal energy sources locally at the wind turbine during the off-grid state. The off-grid state is characterized in that the wind turbine is mechanically and electrically installed at the wind farm but not yet connected to a grid. The method further includes storing at least a portion of the energy in one or more energy storage devices locally at the wind turbine or the wind farm during the off-grid state. Moreover, the method includes using the energy to periodically power one or more electrical power systems used for idle operation or maintenance tasks of the wind turbine during the off-grid state.

## Description

### FIELD

The present disclosure relates in general to wind turbine power generating systems, and more particularly to systems and methods for harvesting energy of a wind turbine during an off-grid state required during idle maintenance of a wind turbine.

### BACKGROUND

Wind power is considered one of the cleanest, most environmentally friendly energy sources presently available, and wind turbines have gained increased attention in this regard. A modern wind turbine typically includes a nacelle fixed atop a tower, a generator and a gearbox housed with the nacelle, and a rotor configured with the nacelle having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid. Modern wind turbines also include a turbine controller for controlling operation thereof.

A plurality of wind turbines may also be arranged in a common geographical location referred to as a wind farm. The wind farm may be connected to a grid for supplying power thereto. However, at installation, there is a time frame whereby the wind turbine(s) is mechanically and electrically complete without a grid interconnect available. This state of the wind turbines/wind farm is generally referred to as an "off-grid state." The time frame of the off-grid state can be days, weeks, months, or even years depending on a number of factors particular to the wind farm site, such as grid availability, grid code requirements, incentives, tax credits, etc. In such instances, the wind turbine(s) of the wind farm require various idle maintenance tasks while off-grid and in a state of vertical storage (i.e., installed but not operational). However, a power source for handling such tasks is not available.

In view of the aforementioned, the present disclosure is directed to systems and methods for harvesting energy of a wind turbine during an off-grid state, such that the harvested energy can be used to handle the various idle maintenance tasks.

### BRIEF DESCRIPTION

Aspects and advantages of the present disclosure will be set forth in part in the following description, or may be obvious from the description, or may be learned through practice of the present disclosure.

In an aspect, the present disclosure is directed to a method for harvesting energy from one or more internal energy sources of a wind turbine of a wind farm during an off-grid state. The off-grid state is characterized in that the wind turbine is mechanically and electrically installed at the wind farm but not yet connected to a grid. The method includes collecting energy from the one or more internal energy sources locally at the wind turbine during the off-grid state. The method also includes storing at least a portion of the energy in one or more energy storage devices locally at the wind turbine or the wind farm during the off-grid state. Further, the method includes using the energy to periodically power one or more electrical power systems used for idle operation or maintenance tasks of the wind turbine during the off-grid state.

In another aspect, the present disclosure is directed to a wind turbine configured for harvesting energy during an off-grid state. The off-grid state is characterized in that the wind turbine is mechanically and electrically installed on site, but not yet connected to a grid. The wind turbine includes a tower, and a rotor mounted atop the tower. The rotor includes a rotatable hub having at least one rotor blade mounted thereto. The wind turbine also includes one or more internal energy sources, one or more energy storage devices, and a turbine controller in communication with the one or more internal energy sources and the one or more energy storage devices. The turbine controller is configured to perform a plurality of operations, including but not limited to collecting energy from the one or more internal energy sources locally at the wind turbine during the off-grid state, storing at least a portion of the energy in the one or more energy storage devices during the off-grid state, and using the energy to periodically power one or more electrical power systems used for idle operation or maintenance tasks of the wind turbine during the off-grid state.

These and other features, aspects and advantages of the present disclosure will become better understood with reference to the following description and appended claims. The accompanying drawings, which are incorporated in and constitute a part of this specification, illustrate embodiments of the present disclosure and, together with the description, serve to explain the principles of the present disclosure.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a simplified, internal view of an embodiment of a nacelle according to the present disclosure;
FIG. 3 illustrates a schematic diagram of an embodiment of a main controller of a wind turbine according to the present disclosure;
FIG. 4 illustrates a schematic view of an embodiment of a wind farm having a plurality of wind turbines according to the present disclosure;
FIG. 5 illustrates a flow diagram of an embodiment of a method for harvesting energy of a wind turbine during an off-grid state according to the present disclosure;
FIG. 6 illustrates a schematic block diagram of an embodiment of a method for harvesting energy of a wind turbine during an off-grid state according to the present disclosure;
FIG. 7 illustrates a partial, perspective view of an embodiment of a nacelle of a wind turbine according to the present disclosure, particularly illustrating solar panels mounted at an angle on top of the nacelle for collecting energy during an off-grid state of the wind turbine; and
FIG. 8 illustrates a perspective view of another embodiment of a nacelle of a wind turbine according to the present disclosure, particularly illustrating solar panels mounted on top of the nacelle in a geodesic triangle pyramid arrangement for collecting energy during an off-grid state of the wind turbine.

Repeat use of reference characters in the present specification and drawings is intended to represent the same or analogous features or elements of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made in the present disclosure without departing from the scope or spirit of the present disclosure. For instance, features illustrated or described as part of an embodiment can be used with another embodiment to yield a still further embodiment. Thus, it is intended that the present disclosure covers such modifications and variations as come within the scope of the appended claims and their equivalents.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

In general, the present disclosure is directed to systems and methods for harvesting energy of a wind turbine during an off-grid state. Wind turbine installation can occur whereby the machine is mechanically and electrically complete without a grid interconnect available. In such instances, an electrical power source is needed to support the idle maintenance tasks of the wind turbine while off-grid and in a state of vertical storage. Thus, in the present disclosure, energy from multiple sources can be collected at the wind turbine and stored locally to support the electrical power needs for the wind turbine. In certain embodiments, kinetic energy from rotation of the rotor, oscillations of the tower, and/or solar radiation provide energy sources for local capture, storage, and utilization. Energy capture methods for kinetic or radiative sources energy can be applied along with storage in rechargeable systems to provide a readily available form of local power for idle maintenance for a wind turbine when an external power source, i.e., electrical grid, temporary generator, is not available.

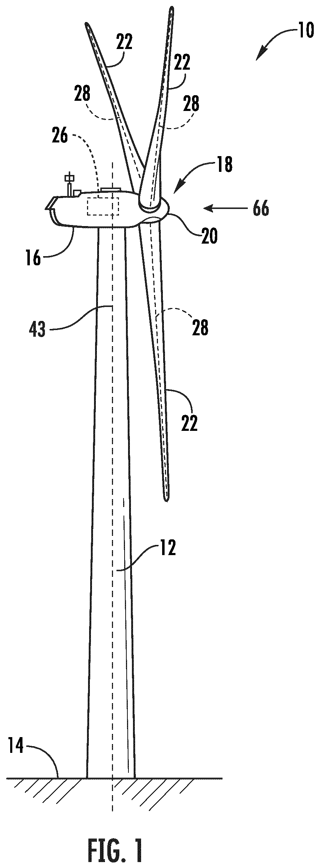

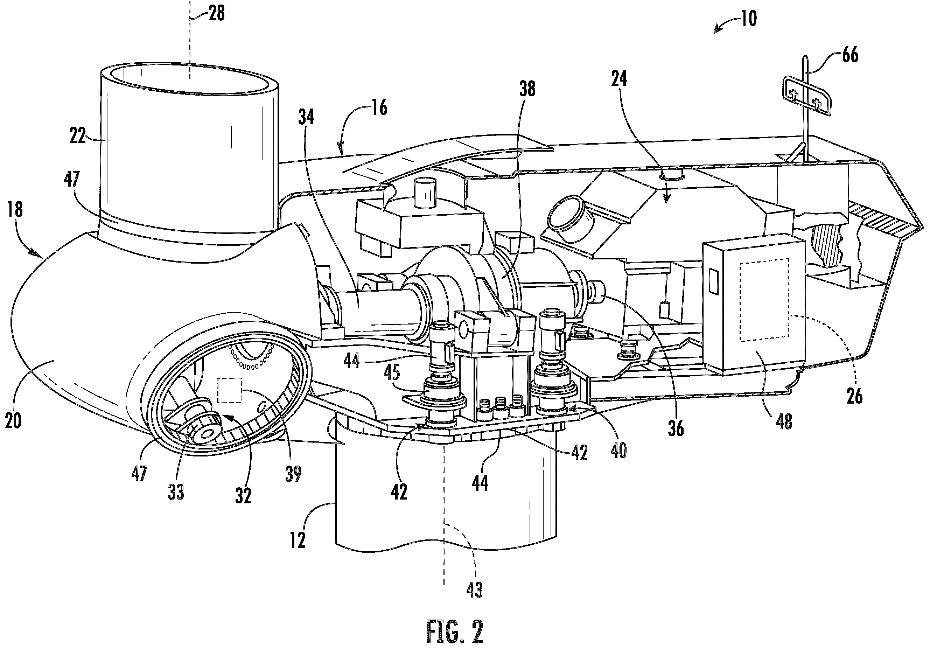

Referring now to the drawings, FIG. 1 illustrates a perspective view of an embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced during normal operation of the wind turbine 10.

The wind turbine 10 may also include a turbine controller 26 centralized within the nacelle 16. For example, as shown, the turbine controller 26 is located in a top box cabinet 48 (FIG 2). However, in other embodiments, the turbine controller 26 may be located within any other component of the wind turbine 10 or at a location outside the wind turbine 10. Further, the turbine controller 26 may be communicatively coupled to any number of the components of the wind turbine 10 or be distributed in order to control the operation of such components and/or implement a control action. As such, the turbine controller 26 may include a computer or other suitable processing unit. Thus, in several embodiments, the turbine controller 26 may include suitable computer-readable instructions that, when implemented, configure the turbine controller 26 to perform various different functions, such as receiving, transmitting, and/or executing wind turbine control action signals, receiving, and analyzing sensor signals, and generating message signals.

By transmitting and executing wind turbine control action signals, the turbine controller 26 may generally be configured to control the various operating modes (e.g., start-up or shut-down sequences) and/or components of the wind turbine 10. For example, the controller 26 may be configured to control the yaw direction of the nacelle 16 about a yaw axis 43 to position the rotor blades 22 with respect to the direction 66 of the wind, thereby controlling the power output generated by the wind turbine 10. For example, as is described in greater detail herein, the turbine controller 26 may be configured to transmit control action signals/commands to one or more yaw drive mechanisms 40 (FIG. 2) of the wind turbine 10 such that the nacelle 16 may be rotated about the yaw axis 43. The turbine controller 26, which may be part of the turbine control circuit or entirely separate, may also operate auxiliary systems in the wind turbine 10 that includes pumps and motors in order to periodically cycle mechanical and electrical systems during off-grid exposure.

Referring now to FIG. 2, a simplified, internal view of an embodiment of the nacelle 16 of the wind turbine 10 shown in FIG. 1 is illustrated. As shown, the generator 24 may be disposed within the nacelle 16. In general, the generator 24 may be coupled to the rotor 18 for producing electrical power from the rotational energy generated by the rotor 18 during operation of the wind turbine 10. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. As is generally understood, the rotor shaft 34 may provide a low speed, high torque input to the gearbox 38 in response to rotation of the rotor blades 22 and the hub 20. The rotor shaft 34 usually comprises a flange 35 that facilitates mechanical engagement of the rotor shaft 34 to the hub 20. The gearbox 38 opposite the hub 20 may then be configured to convert the low speed, high torque input to a high speed, low torque output to drive the generator shaft 36 and, thus, the generator 24.

The nacelle 16 may include a yaw drive mechanism 40 configured to change the angle of the nacelle 16 relative to the wind (e.g., by engaging a yaw bearing 42 of the wind turbine 10 that is arranged between the nacelle 16 and the tower 12 of the wind turbine 10). Further, each yaw drive mechanism 40 may include a yaw drive motor 44 (e.g., any suitable electric or hydraulic motor), a yaw drive gearbox 45, and a yaw drive pinion 46. In such embodiments, the yaw drive motor 44 may be coupled to the yaw drive gearbox 45 so that the yaw drive motor 44 imparts mechanical force to the yaw drive gearbox 45. Similarly, the yaw drive gearbox 45 may be coupled to the yaw drive pinion 46 for rotation therewith. The yaw drive pinion 46 may, in turn, be in rotational engagement with the yaw bearing 42 coupled between the tower 12 and the nacelle 16 such that rotation of the yaw drive pinion 46 causes rotation of the yaw bearing 42. Thus, in such embodiments, rotation of the yaw drive motor 44 drives the yaw drive gearbox 45 and the yaw drive pinion 46, thereby rotating the yaw bearing 42 and the nacelle 16 about the yaw axis 43.

Similarly, the wind turbine 10 may include a pitch system 32 having one or more pitch adjustment mechanisms 33 communicatively coupled to the turbine controller 26, with each pitch adjustment mechanism(s) 33 being configured to rotate the pitch bearing 47 and thus the individual rotor blade(s) 22 about the pitch axis 28. The pitch adjustment mechanism(s) 33 described herein may have any suitable arrangement. In addition, the pitch adjustment mechanism(s) 33 may include a pitch motor, a pitch gearbox, and a pitch pinion. Furthermore, as shown, the pitch system 32 may also include a pitch system storage medium 39. In such embodiments, the pitch system storage medium 39 may include a battery, an ultracapacitor, and/or any other suitable storage medium.

In addition, the wind turbine 10 may also include one or more sensors 52 for monitoring various wind conditions of the wind turbine 10 and one or more sensor 37 for sensing load conditions acting on the wind turbine. For example, as shown in FIG. 2, the wind direction, wind speed, or any other suitable wind condition near the wind turbine 10 may be measured, such as through use of a suitable weather sensor 52. Suitable weather sensors 52 include, for example, Light Detection and Ranging ("LIDAR") devices, Sonic Detection and Ranging ("SODAR") devices, anemometers, wind vanes, barometers, radar devices (such as Doppler radar devices), Meteorological (Met) Mast systems, or any other in situ or remote sensing device(s) or system(s) that can provide weather, pressure, or wind information now known or later developed in the art.

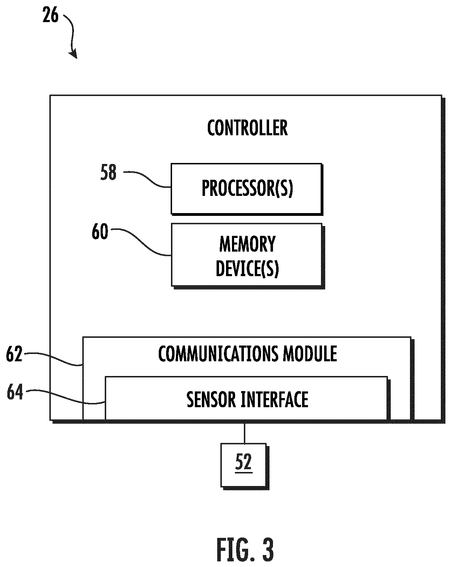

Referring now to FIG. 3, a block diagram of an embodiment of the turbine controller 26 according to the present disclosure is illustrated. As shown, the turbine controller 26 may include a computer or other suitable processing unit that may include suitable computer-readable instructions that, when implemented, configure the controller 26 to perform various different functions, such as receiving, transmitting, and/or executing wind turbine control action signals. More specifically, as shown, there is illustrated a block diagram of an embodiment of suitable components that may be included within the turbine controller 26 in accordance with example aspects of the present disclosure. As shown, the turbine controller 26 may include one or more processor(s) 58 and associated memory device(s) 60 configured to perform a variety of computer-implemented functions (e.g., performing the methods, steps, calculations and the like disclosed herein).

As used herein, the term "processor" refers not only to integrated circuits referred to in the art as being included in a computer, but also refers to a controller, a microcontroller, a microcomputer, a programmable logic controller (PLC), an application specific integrated circuit such as a relay device, and other programmable circuits. Additionally, the memory device(s) 60 may generally include memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD), physically configured settings with dip or rotary switches, and/or other suitable memory elements.

Such memory device(s) 60 may generally be configured to store suitable computer-readable instructions that, when implemented by the processor(s) 58, configure the turbine controller 26 to perform various functions as described herein. Additionally, the turbine controller 26 may also include a communications interface 62 to facilitate communications between the turbine controller 26 and the various components of the wind turbine 10. In an embodiment, the communications interface 62 can support a combination of open loop or closed loop feedback between sensors or other communication modules. An interface can include one or more circuits, terminals, pins, contacts, conductors, or other components for sending and receiving control action signals. Moreover, the turbine controller 26 may include a sensor interface 64 (e.g., one or more analog-to-digital converters) to permit signals transmitted from the sensors to be converted into signals that can be understood and processed by the processors 58.

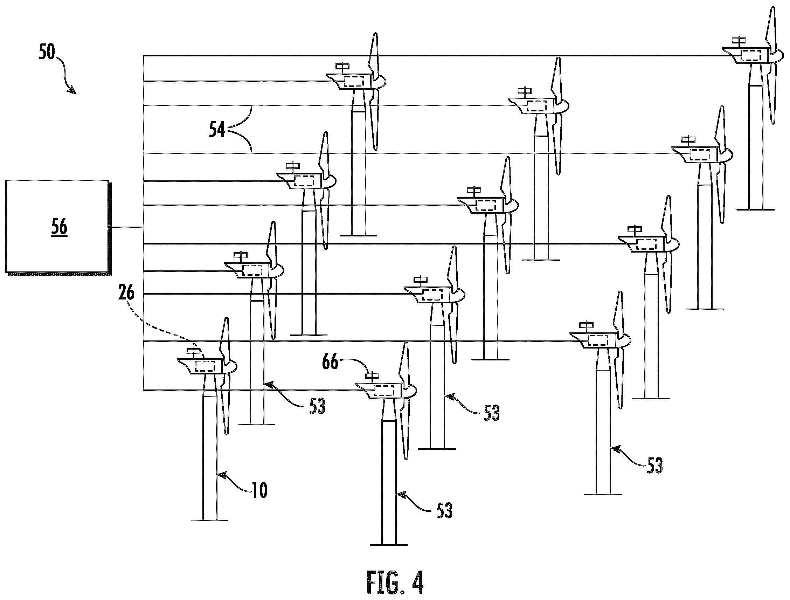

Referring now to FIG. 4, the wind turbine 10 described herein may be part of a wind farm 50. As shown, the wind farm 50 may include a plurality of wind turbines 53, including the wind turbine 10 described above, and an overall farm-level controller 56. For example, as shown in the illustrated embodiment, the wind farm 50 includes twelve wind turbines, including the wind turbine 10. However, in other embodiments, the wind farm 50 may include any other number of wind turbines, such as less than twelve wind turbines or greater than twelve wind turbines. In an embodiment, the turbine controllers of the plurality of wind turbines 53 are communicatively coupled to the farm-level controller 56, e.g., through a wired connection, such as by connecting the turbine controller 26 through suitable communicative links 54 (e.g., a suitable cable). Alternatively, the turbine controllers may be communicatively coupled to the farm-level controller 56 through a wireless connection, such as by using any suitable wireless communications protocol known in the art. In further embodiments, the farm-level controller 56 is configured to send and receive control signals to and from the various wind turbines 53.

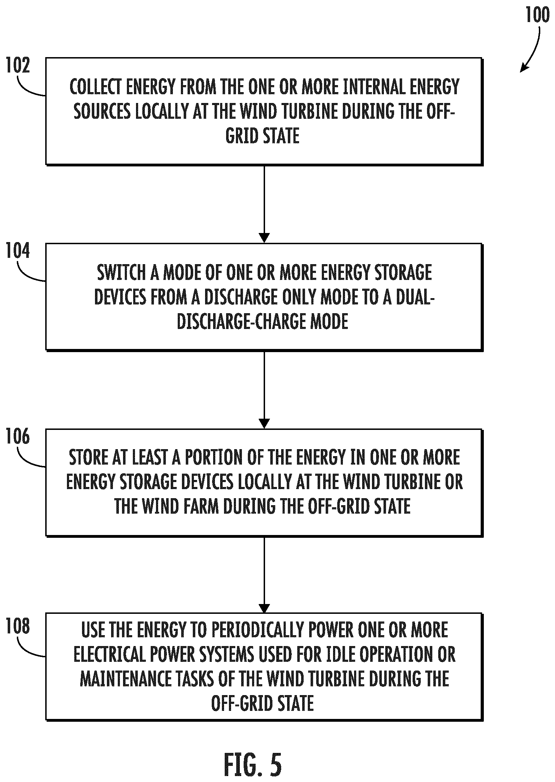

Referring now to FIG. 5, a flow diagram of an embodiment of a method 100 for harvesting energy from one or more internal energy sources of a wind turbine of a wind farm during an off-grid state is illustrated according to the present disclosure. During normal operation, energy storage devices, such as batteries, of the wind turbine 10 are charged during grid availability by pulling power from the grid or the power generated by the wind turbine 10. During the off-grid state, these sources of power are not available. As such, during the off-grid state, the present disclosure utilizes internal energy sources to provide power to the energy storage devices for use when needed. As used herein, "internal energy sources" generally refer to those sources that do not utilize the grid, such as off-grid energy sources, charge/discharge regulators, and/or energy storage mediums, in contrast to grid-based energy sources.

Moreover, as used herein, the off-grid state characterized in that the wind turbine is mechanically and electrically installed at the wind farm but not yet connected to a grid. In general, the method 100 is described herein with reference to the wind turbine 10 and the wind farm 50 of FIGS. 1-4. However, it should be appreciated that the disclosed method 100 may be implemented with any wind turbines having any other suitable configurations. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

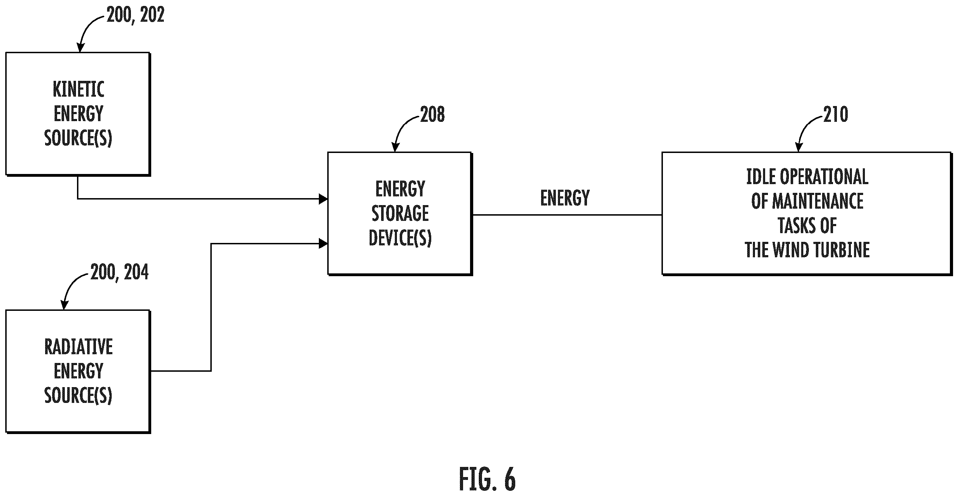

As shown at (102), the method 100 includes collecting energy from the one or more internal energy sources locally at the wind turbine during the off-grid state. For example, as shown in FIG. 6, in an embodiment, the internal energy source(s) 200 may include a kinetic energy source 202 and/or a radiative energy source 204.

In such embodiments, the kinetic energy source 202 may represent kinetic energy from rotation of the rotor 18 of the wind turbine 10, kinetic energy from oscillations of the tower 12 of the wind turbine 10, and/or any other suitable kinetic energy source of the wind turbine 10. As such, in an embodiment, the method 100 may include connecting the rotor 18 of the wind turbine 10 to a permanent magnetic electric motor connected to a high speed flywheel on a drivetrain of the wind turbine 10. Thus, rotation of the rotor 18 drives the permanent magnetic electric motor to generate the kinetic energy. In another embodiment, the method 100 may include connecting the tower 12 of the wind turbine 10 to a linear electromagnetic electric generator, wherein the oscillations of the tower 12 drives the linear electromagnetic electric generator to generate the kinetic energy.

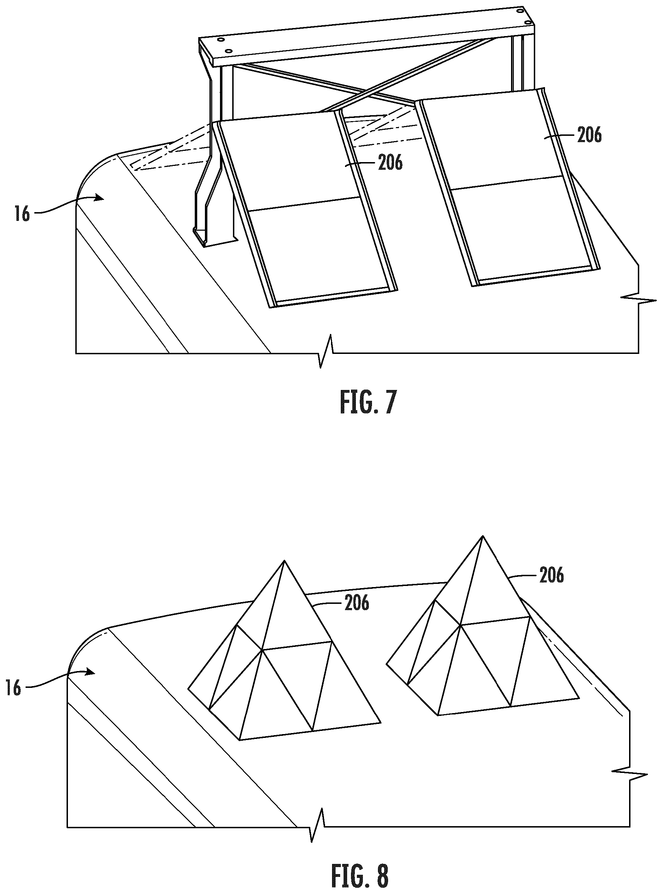

Further, in an embodiment, the radiative energy source 204 may include solar radiation from one or more solar panels 206 installed on the wind turbine 10. For example, as shown in FIG. 7, the wind turbine 10 may include one or more solar panels 206 installed on top of the nacelle 16, particularly illustrating that the solar panels 206 can be angled up or down. In certain embodiments, such solar panels 206 may be mounted in a fixed position or may be controlled via an actuator (not shown) to change an angle of one or more of the solar panels 206 with respect to the nacelle 16 and thus the sun. In addition, as shown in FIG. 8, a perspective view of another embodiment of the nacelle 16 of the wind turbine 10 according to the present disclosure is illustrated, particularly illustrating the solar panels 206 mounted on top of the nacelle 16 in a geodesic triangle pyramid arrangement for collecting energy during an off-grid state of the wind turbine 10. As used herein, a geodesic triangle pyramid generally refers to an arrangement of smaller triangular sub-components joined together to form a larger triangular four-sided pyramid. In such embodiments, the geodesic triangle pyramid may also be referred to as a pyradome, wherein the triangular arrangement of the solar panels 206 are mounted in manner to allow continuous exposure to the sun's rays regardless of wind turbine heading or inclination angle of the sun's rays to the incident solar panel.

Moreover, in an embodiment, the radiative energy source(s) are connected in a manner to limit the open circuit voltage through parallel and series wiring connections between individual energy sources for the collective output of the energy source system. In particular, electrical connection of the solar panel(s) 206 is implemented to limit the voltage potential and electrical hazards. For example, through combinations of parallel and series wire connections, the solar panels can be electrically connected in such a way to limit the open circuit voltage for the total system.

Referring back to FIG. 5, as shown at (104), the method 100 may optionally include switching a mode of one or more energy storage devices 208 from a discharge only mode to a dual-discharge-internal charge mode as part of one or more off-grid conditions. In an embodiment, for example, the energy storage device(s) 208 may be an existing pitch system storage medium (e.g., the pitch system storage medium 39 described herein), an existing power converter storage medium in a power converter of the wind turbine 10, an auxiliary storage system in the wind turbine 10, or an existing farm-level energy storage medium at the wind farm 50 (such as a storage medium in the farm-level controller 56). Thus, in an embodiment, wherein the energy storage device(s) is the existing pitch system storage medium, since the existing pitch system storage medium is operated in a discharge only mode during a normal state of the wind turbine 10, the method 100 may include switching a mode of the existing pitch system storage medium from the discharge only mode to a dual-discharge-charge mode before storing at least the portion of the energy locally at the wind turbine 10.

As shown at (106), the method 100 further includes storing at least a portion of the energy in one or more energy storage devices 208 locally at the wind turbine 10 or the wind farm 50 during the off-grid state. Thus, as shown in FIG. 6, the collected energy from the multiple energy sources can be stored, e.g., on-board the wind turbine 10 and/or locally at the wind farm 50.

Referring back to FIG. 5, as shown at (108), the method 100 includes using the energy to periodically power one or more electrical power systems used for idle operation or maintenance tasks 210 of the wind turbine during the off-grid state. For example, in an embodiment, as shown in FIG. 6, the idle operation or maintenance tasks 210 of the wind turbine 10 during the off-grid state may include periodic operation of a motor system, a programmable logic controller (PLC) system, auxiliary lighting, or a hoisting device.

Further aspects of the present disclosure are provided by the subject matter of the following clauses:

A method for harvesting energy from one or more internal energy sources of a wind turbine of a wind farm during an off-grid state, the off-grid state characterized in that the wind turbine is mechanically and electrically installed at the wind farm but not yet connected to a grid, the method comprising: collecting energy from the one or more internal energy sources locally at the wind turbine during the off-grid state; storing at least a portion of the energy in one or more energy storage devices locally at the wind turbine or the wind farm during the off-grid state; and using the energy to periodically power one or more electrical power systems used for idle operation or maintenance tasks of the wind turbine during the off-grid state.

The method of any preceding clause, further comprising switching a mode of the one or more energy storage devices from a discharge only mode to a dual-discharge-internal charge mode as part of one or more off-grid conditions before storing at least the portion of the energy locally at the wind turbine.

The method of any preceding clause, wherein the one or more energy storage devices comprises at least one of an existing pitch system storage medium, an existing power converter storage medium, an auxiliary storage system in the wind turbine, or an existing farm-level energy storage medium at the wind farm.

The method of any preceding clause, wherein the one or more energy storage devices comprises the existing pitch system storage medium, the existing pitch system storage medium operated in a discharge only mode during a normal state of the wind turbine.

The method of any preceding clause, further comprising switching a mode of the existing pitch system storage medium from the discharge only mode to a dual-discharge-internal charge mode as part of one or more off-grid conditions before storing at least the portion of the energy locally at the wind turbine.

The method of any preceding clause, wherein the existing pitch system storage medium comprises at least one of a battery or an ultracapacitor.

The method of any preceding clause, wherein the one or more internal energy sources comprise at least one a kinetic energy source or a radiative energy source.

The method of any preceding clause, wherein the kinetic energy source comprises at least one of kinetic energy from rotation of a rotor of the wind turbine or kinetic energy from oscillations of a tower of the wind turbine.

The method of any preceding clause, further comprising connecting the rotor of the wind turbine to a permanent magnetic electric motor connected to a high speed flywheel on a drivetrain of the wind turbine, wherein rotation of the rotor drives the permanent magnetic electric motor.

The method of any preceding clause, further comprising connecting the tower of the wind turbine to a linear electromagnetic electric generator, wherein the oscillations of the tower of the wind turbine drives the linear electromagnetic electric generator.

The method of any preceding clause, wherein the radiative energy source comprises solar radiation from one or more solar panels installed on the wind turbine.

The method of any preceding clause, wherein the idle operation or maintenance tasks of the wind turbine during the off-grid state comprise at least one of periodic operation of a motor system, a programmable logic controller (PLC) system, auxiliary lighting, or a hoisting device.

A wind turbine configured for harvesting energy during an off-grid state, the off-grid state characterized in that the wind turbine is mechanically and electrically installed on site, but not yet connected to a grid, the wind turbine comprising: a tower; a rotor mounted atop the tower, the rotor comprising a rotatable hub having at least one rotor blade mounted thereto; one or more internal energy sources; one or more energy storage devices; a turbine controller in communication with the one or more internal energy sources and the one or more energy storage devices, the turbine controller configured to perform a plurality of operations, the plurality of operations comprising: collecting energy from the one or more internal energy sources locally at the wind turbine during the off-grid state; storing at least a portion of the energy in the one or more energy storage devices during the off-grid state; and using the energy to periodically power one or more electrical power systems used for idle operation or maintenance tasks of the wind turbine during the off-grid state.

The wind turbine of any preceding clause, wherein the one or more energy storage devices comprises at least one of an existing pitch system storage medium, an existing power converter storage medium, an auxiliary storage system in the wind turbine, or an existing farm-level energy storage medium.

The wind turbine of any preceding clause, wherein the one or more energy storage devices comprises the existing pitch system storage medium, the existing pitch system storage medium comprising at least one of a battery or an ultracapacitor, the existing pitch system storage medium operated in a discharge only mode during a normal state of the wind turbine.

The wind turbine of any preceding clause, wherein the plurality of operations further comprise switching a mode of the existing pitch system storage medium from a regulated discharge only mode to a dual-discharge-internal charge mode as part of one or more off-grid conditions before storing at least the portion of the energy locally at the wind turbine.

The wind turbine of any preceding clause, wherein the one or more internal energy sources comprise at least one a kinetic energy source or a radiative energy source, the kinetic energy source comprising at least one of kinetic energy from rotation of a rotor of the wind turbine or kinetic energy from oscillations of a tower of the wind turbine, the radiative energy source comprising solar radiation from one or more solar panels installed on the wind turbine.

The wind turbine of any preceding clause, wherein the plurality of operations further comprise connecting the rotor of the wind turbine to a permanent magnetic electric motor connected to a high speed flywheel on a drivetrain of the wind turbine, wherein rotation of the rotor drives the permanent magnetic electric motor.

The wind turbine of any preceding clause, wherein the plurality of operations further comprise connecting the tower of the wind turbine to a linear electromagnetic electric generator, wherein the oscillations of the tower of the wind turbine drives the linear electromagnetic electric generator.

The wind turbine of any preceding clause, wherein the idle operation or maintenance tasks of the wind turbine during the off-grid state comprise at least one of periodic operation of a motor system, a programmable logic controller (PLC) system, auxiliary lighting, or a hoisting device.

This written description uses examples to disclose the present disclosure, including the best mode, and also to enable any person skilled in the art to practice the present disclosure, including making and using any devices or systems and performing any incorporated methods. The patentable scope of the present disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for harvesting energy from one or more internal energy sources of a wind turbine of a wind farm during an off-grid state, the off-grid state **characterized in that** the wind turbine is mechanically and electrically installed at the wind farm but not yet connected to a grid, the method comprising:
collecting energy from the one or more internal energy sources locally at the wind turbine during the off-grid state;
storing at least a portion of the energy in one or more energy storage devices locally at the wind turbine or the wind farm during the off-grid state; and
using the energy to periodically power one or more electrical power systems used for idle operation or maintenance tasks of the wind turbine during the off-grid state.

2. The method of claim 1, further comprising switching a mode of the one or more energy storage devices from a discharge only mode to a dual-discharge-internal charge mode as part of one or more off-grid conditions before storing at least the portion of the energy locally at the wind turbine.

3. The method of claims 1-2, wherein the one or more energy storage devices comprises at least one of an existing pitch system storage medium, an existing power converter storage medium, an auxiliary storage system in the wind turbine, or an existing farm-level energy storage medium at the wind farm.

4. The method of claim 3, wherein the one or more energy storage devices comprises the existing pitch system storage medium, the existing pitch system storage medium operated in a discharge only mode during a normal state of the wind turbine.

5. The method of claim 4, further comprising switching a mode of the existing pitch system storage medium from the discharge only mode to a dual-discharge-internal charge mode as part of one or more off-grid conditions before storing at least the portion of the energy locally at the wind turbine.

6. The method of claims 4-5, wherein the existing pitch system storage medium comprises at least one of a battery or an ultracapacitor.

7. The method of any preceding claim, wherein the one or more internal energy sources comprise at least one a kinetic energy source or a radiative energy source.

8. The method of claim 7, wherein the kinetic energy source comprises at least one of kinetic energy from rotation of a rotor of the wind turbine or kinetic energy from oscillations of a tower of the wind turbine.

9. The method of claim 8, further comprising connecting the rotor of the wind turbine to a permanent magnetic electric motor connected to a high speed flywheel on a drivetrain of the wind turbine, wherein rotation of the rotor drives the permanent magnetic electric motor.

10. The method of claims 8-9, further comprising connecting the tower of the wind turbine to a linear electromagnetic electric generator, wherein the oscillations of the tower of the wind turbine drives the linear electromagnetic electric generator.

11. The method of claims 7-10, wherein the radiative energy source comprises solar radiation from one or more solar panels installed on the wind turbine.

12. The method of any preceding claim, wherein the idle operation or maintenance tasks of the wind turbine during the off-grid state comprise at least one of periodic operation of a motor system, a programmable logic controller (PLC) system, auxiliary lighting, or a hoisting device.

13. A wind turbine configured for harvesting energy during an off-grid state, the off-grid state **characterized in that** the wind turbine is mechanically and electrically installed on site, but not yet connected to a grid, the wind turbine comprising:
a tower;
a rotor mounted atop the tower, the rotor comprising a rotatable hub having at least one rotor blade mounted thereto;
one or more internal energy sources;
one or more energy storage devices; and
a turbine controller in communication with the one or more internal energy sources and the one or more energy storage devices, the turbine controller configured to perform a plurality of operations, the plurality of operations comprising:
collecting energy from the one or more internal energy sources locally at the wind turbine during the off-grid state;
storing at least a portion of the energy in the one or more energy storage devices during the off-grid state; and
using the energy to periodically power one or more electrical power systems used for idle operation or maintenance tasks of the wind turbine during the off-grid state.

14. The wind turbine of claim 13, wherein the one or more energy storage devices comprises at least one of an existing pitch system storage medium, an existing power converter storage medium, an auxiliary storage system in the wind turbine, or an existing farm-level energy storage medium.

15. The wind turbine of claim 14, wherein the one or more energy storage devices comprises the existing pitch system storage medium, the existing pitch system storage medium comprising at least one of a battery or an ultracapacitor, the existing pitch system storage medium operated in a discharge only mode during a normal state of the wind turbine.
